(19) Europäisches Patentamt
European Patent Office
Office européen des brevets

(11) **EP 0 515 701 B1**

(12) **EUROPEAN PATENT SPECIFICATION**

(45) Date of publication and mention
of the grant of the patent:
**20.03.1996   Bulletin 1996/12**

(51) Int Cl.$^6$: **C23C 8/26**, C23C 8/34,
F16C 3/06

(21) Application number: **92902485.9**

(22) Date of filing: **20.11.1991**

(86) International application number:
**PCT/JP91/01597**

(87) International publication number:
**WO 92/08820 (29.05.1992 Gazette 1992/12)**

(54) **METHOD OF MANUFACTURING A CRANKSHAFT**

VERFAHREN ZUR HERSTELLUNG EINER KURBELWELLE

PROCEDE DE FABRICATION D'UN VILEBREQUIN

(84) Designated Contracting States:
**DE FR GB**

(30) Priority: **20.11.1990 JP 316561/90**

(43) Date of publication of application:
**02.12.1992   Bulletin 1992/49**

(73) Proprietor: **DAIDO HOXAN INC.**
**Sapporo-city (JP)**

(72) Inventor: **YOSHINO, Akira**
**Osakasayama-shi, Osaka 589 (JP)**

(74) Representative: **Marlow, Nicholas Simon et al**
**Reddie & Grose**
**16, Theobalds Road**
**London WC1X 8PL (GB)**

(56) References cited:
**JP-A- 1 158 212          JP-A- 2 175 855**
**JP-A- 3 193 861          JP-A-58 160 618**

• **PATENT ABSTRACTS OF JAPAN, vol. 9, no.**
**228 (C-303), 13 September 1985**

## Description

The invention relates to the manufacture of a crank shaft of which a journal portion is formed with a hard nitride layer to have remarkably improved properties such as durability and also to a method of manufacturing the crank shaft.

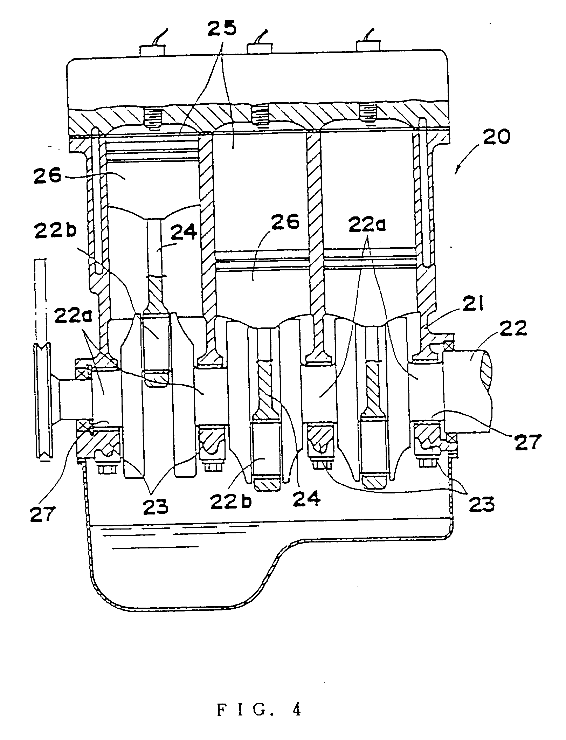

Generally, a crank shaft for an engine is, as shown in Fig. 4, rotatably supported at its journal portions 22a to bearings 23 provided in a crank casing 21 of the engine 20, and pins 22b are connected with con'rods 24 in a manner of being freely rotatable, so that a force applied to the crank shaft 22 tends to cause the crank shaft 22 to be bent around the bearings 23 when a piston 26 is moved down due to explosion in a combustion chamber 25. Therefore, the journal portions 22a in association with bearing metals 27 at the bearings 23 are required to have high durability.

Hence, specific kinds of steel material having high durability are selected for the crank shaft 22 to improve durability at its journal portions 22a. This, however, leads such problems as an increase in cost of material and weight.

The present invention has been designed to overcome the above problems. An object of the present invention is to improve durability of the journal portions of the motor rotary shaft without an increase in cost of material and weight.

Earlier European Patent Application No. EP.0408168, unpublished at the date of filing the present application discloses a method of nitriding shafts with a pre-nitriding flucriding step.

The invention provides a manufacturing method of a crank shaft wherein a journal portion of the crank shaft is held in a fluorine- or fluoride-containing gas atmosphere under heated condition for forming a fluoride layer on the surface of the journal portion, and thereafter further held in a nitride atmosphere under heated condition for forming a hard nitride layer on the surface of the journal portion.

In detail, the crank shaft produced by the method of the present invention is constructed at the surface layer of the journal portion with a hard nitride layer but does not employ a hard material for the whole crank shaft, thereby enabling provision of the crank shaft which is obtainable at a low cost, not so heavy and excellent in durability. Furthermore, in the manufacturing method of the crank shaft according to the present invention, the journal portion of the shaft is first held in a fluorine- or fluoride-containing gas atmosphere under heat condition to form a fluoride layer on the surface of the journal portion, and further held in a nitride atmosphere under heated condition to remove the formed fluoride layer from the journal portion and simultaneously form a hard nitride layer on the part removed (on the surface layer of the journal portion). In the course of processes, formation of the fluoride layer on the surface of the journal portion is carried out before nitriding to purify and at the same time activate the surface of the journal portion, so that the nitride layer can be uniformly and rather deeply formed on the surfaces of the journal portion, whereby the hard nitride layer can be uniform and thick in thickness.

Next, details of the present invention is described below.

The Fluorine- and fluoride-containing gas to be used for the fluorinating process in the present invention is an inactive gas, such as $N_2$ containing at least one of the fluorine source components, such as $NF_3$, $BF_3$, $CF_4$, HF, $SF_6$ and $F_2$. $NF_3$ is most preferable and useful in respect of reactivity, handling properties and the like for the purpose.

Upon the nitriding process in the manufacturing method according to the present invention, the journal portion of the crank shaft (made of steel, such as stainless steel, and with the other portion than the journal portion being masked by coating a known anti-hardening agent) is held, as aforementioned, in the fluorine- or fluoride-containing gas atmosphere under heated condition at 250 to 400°C when $NF_3$ is used, for example, to form a fluoride layer on the surface of the journal portion, followed by nitriding (or carbon nitriding) using a known nitriding gas, such as ammonia. Concentration of the fluorine source components such as $NF_3$ in the fluoride gas is, for example, 1000 to 100000ppm, preferably 20000 to 70000ppm and most preferably 30000 to 50000ppm. Time for holding in the fluorine- or fluoride-containing gas may be selectively set corresponding to kinds of steel materials, shapes and sizes of the crank shaft, heating temperatures or the like and it is generally a few minutes or scores of minutes.

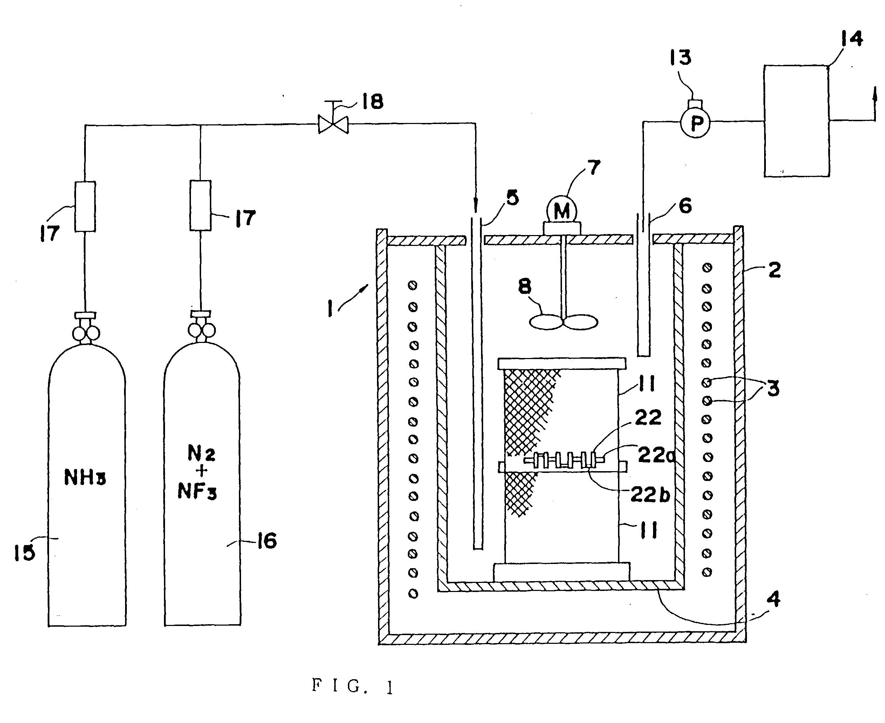

The manufacturing process of the present invention will be further detailed. A journal portion 22a of a crank shaft 22 shown in Fig. 4 which is made of steel and masked at portions other than the journal portion may be cleaned to be degreased and placed in a heat treatment furnace 1 as shown in Fig. 1. The heating furnace 1 is a pit furnace comprising an outer shell 2, a heater 3 provided therein and an inner container 4 disposed inside the heater 3. A gas guide line 5 and an exhaust pipe 6 are inserted into the pit furnace. Gas is fed to the gas guide line 5 from cylinders 15, 16 through a flow meter 17 and a valve 18 and the like. The atmosphere inside the pit furnace is agitated by a fan 8 which is rotated by a motor 7. The crank shaft 22 is held in a metallic container 11 to be placed in the furnace. In the drawing, reference numeral 13 denotes a vacuum pump and 14 noxious substance eliminator. Fluorine- or fluoride-containing gas, for example a mixed gas of $NF_3$ and $N_2$ is injected into the furnace and heated to a predetermined reaction temperature. $NF_3$ generates active fluorine at 250 to 400°C , so that organic and inorganic contaminants on the surfaces of the journal portion 22a are removed and the generated fluorine is simultaneously reacted with Fe, chrome substrate or oxides such as FeO, $Fe_3O_2$, and $Cr_2O_3$ on the surface of the journal portion 22a as represented in the following formula, thereby forming on the surface of the journal portion 22a a quite thin fluoride layer containing therein such compounds as $FeF_2$, $FeF_3$, $CrF_2$ and $CrF_4$.

$$FeO + 2F \rightarrow FeF_2 + 1/2O_2$$

$$Cr_2O_3 + 4F \rightarrow 2CrF_2 + 3/2O_2$$

The reaction changes an oxide layer on the surfaces of journal portion 22a to a fluoride layer and removes $O_2$ adsorbed on the same surface. The fluoride layer is stable at temperatures below 600 °C when there exists no $O_2$, $H_2$, nor $H_2O$, to thereby prevent forming any oxide layer and adsorption of $O_2$ on and by the metallic substrates. Also, according to the fluorinating process, the fluoride layer is formed on the surface of the furnace material at the initial stage, so that the fluoride layer thereafter prevents a possible damage to the surfaces of furnace material due to application of the fluorine- or fluoride-containing gas. The journal portion 22a duly treated with the fluorine- or fluoride-containing gas is further heated to a nitriding temperature 480 to 700°C and applied in this state with $NH_3$ gas or a mixed gas of $NH_3$ and a gas containing carbon sources (such as RX gas), whereby the aforesaid fluoride layer is reduced or broken by $H_2$ or a trace amount of water as represented by the following formula, thereby causing the active metallic substrates to be formed and exposed.

$$CrF_4 + 2H_2 \rightarrow Cr + 4HF$$

$$2FeF_3 + 3H_2 \rightarrow 2Fe + 6HF$$

Simultaneously with formation of the activated metallic substrates, active N atoms enter and disperse in the metal, resulting in a solid compound layer (nitride layer) containing such nitrides as $CrN$, $Fe_2N$, $Fe_3N$, and $Fe_4N$ forming on the surfaces of the metallic substrate. Then, the foregoing masking of the rotary shaft 22 is duly removed.

The conventional nitriding process forms similar nitride layers to the above but it has lower activity on the substrates surfaces due to oxidized layer formed thereon during the elevation of temperatures from normal room temperatures to nitriding temperatures or $O_2$ adsorbed at that time, so that the degree of adsorption of N atoms on the substrates surfaces is low and not uniform. The non-uniformity is enlarged also by the fact that it is practically hard to keep the degree of decomposition of $NH_3$ uniform in the furnace. According to the manufacturing process of the present invention, adsorption of N atoms on the surface of the journal portion 22a is carried out uniformly and quickly to thereby exclude the above problem while providing the solid nitride layer.

The resultant crank shaft 22 in which the surface layer of its journal portion 22a includes a hard nitride layer A as shown in Fig. 2 is thereby excellent in durability.

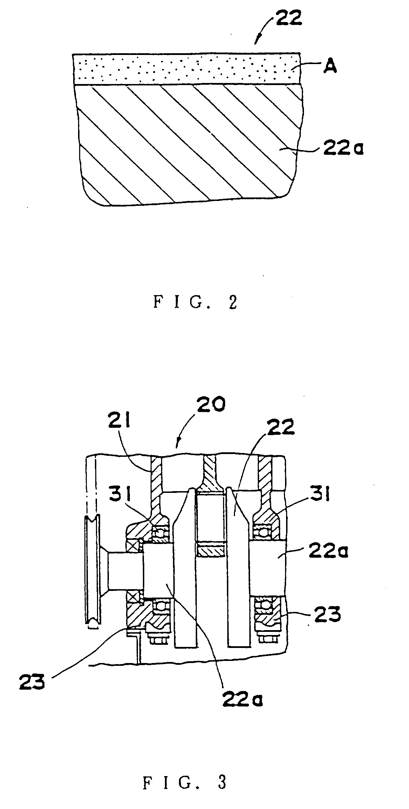

An engine 20 shown in Fig. 3 is substantially identical with that of Fig. 4 except that it uses a ball bearings 31 for the bearings of the crank shaft 22. In this case, the ball bearing 31 (particularly the rolling member, such as balls, and ball races) are nitrided together with the journal portion 23 of said crank shaft 22 by the nitriding process according to the present invention, whereby the ball bearings 31 themselves can be reduced in frictional resistance and further rigidly fitted to the journal portions 22a.

The nitriding process of the manufacturing method according to the present invention may be applied to the whole crank shaft 22, not merely to the journal portion as referred to in the above example.

Although steel is used for the crank shaft in the above-mentioned example, metallic materials such as aluminium and titanium other than steel may be used for the crank shaft and the same effect as above can be obtained.

As seen from the above, the crank shaft of the present invention is constructed at the surface layer of the journal portion with a hard nitride layer but does not employ a hard material for the whole crank shaft, so that it is able to provide the crank shaft which is obtainable at a low cost, not so heavy and excellent in durability. Also, the crank shaft of the present invention can reduce in resistance to slide to about one third with the solid nitrided layer, to thereby be able to realize a saving of the coolant or the like. Furthermore, as above-mentioned, in the manufacturing method according to the present invention, fluorinating is carried out before the nitriding process to change the passive coat layer such as oxide layer on the surface of the journal portion to fluoride layer which protects the same surface. Therefore, even when there is space of time between formation of the fluoride layer on the journal portion and the nitriding process, the fluoride protects and keeps the surface of the journal portion in a favorable condition, resulting in that re-formation of oxide layer on that surface is prevented. The fluoride layer is decomposed and removed in the subsequent nitriding process to cause the surface of the journal portion to be exposed. Since the exposed metal surface is activated, N atoms in the nitriding process readily, deeply and uniformly disperse into the journal portion, thereby forming the surface layer of the journal portion into a thick and uniform hard nitrided layer.

BRIEF DESCRIPTION OF THE DRAWINGS

Fig. 1 is a schematic sectional view showing a heat treatment furnace used in an example of the present invention,

Fig. 2 is a sectional view showing a condition of a nitride layer formed on the journal portion of the crank shaft,

Figs. 3 and 4 are sectional views showing principal parts of engines provided with respective crank shafts.

## DETAILED DESCRIPTION OF THE PREFERRED EMBODIMENTS

Next, the present invention will be referred to according to an example.

(Examples)

Journal portions and pins of a crank shaft (300 x∅ 25mm) made of SUS316 stainless steel were washed with trichloroethane. The washed shaft was masked at its portions other than the journal portions and the pins then placed in a heat treatment furnace 1 as shown in Fig. 1 to be held in an $N_2$ gas atmosphere containing 5000ppm of $NF_3$ at 300°C for 15 minutes, followed by heating to 530 °C and a mixed gas of 50% of $NH_3$ + 50% of $N_2$ was introduced into the heat treatment furnace 1 to perform nitriding of the shaft for 3 hours. Then, the shaft was air-cooled and taken out of the furnace. The thicknesses of the nitride layer of the journal portion and the pins of the crank shaft were 10 to 70 μm, and the surface hardness of the nitride layer were 1000 to 1350Hv and the hardness was substantially higher than that obtained by the conventional nitriding method.

## Claims

1. A method of manufacturing a crank shaft comprising holding a journal portion of the crank shaft in a fluorine- or fluoride-containing gas atmosphere under heated condition for forming a fluoride layer on the surface of the journal portion and thereafter further holing in a nitride atmosphere under heated condition for forming a hard nitride layer in the surface of the journal portion.

2. A method according to claim 1 in which the journal portion of the crank shaft is held in a fluorine- or fluoride-containing gas atmosphere comprising 20,000 to 70,000ppm fluorine- or fluoride-containing gas.

3. A method according to claim 1 or 2 in which the journal portion of the crank shaft is held in a fluorine- or fluoride-containing gas atmosphere for a few minutes to scores of minutes.

4. A method according to claim 1 in which the journal portion of the crank shaft is held in a fluorine- or fluoride- containing gas atmosphere under heated conditions for about fifteen minutes.

5. A method of manufacturing a bearing for a crank shaft comprising holding ball bearings in a fluorine- or fluoride-containing gas atmosphere under heated conditions for forming a fluoride layer on the surface of the ball bearings and thereafter further holding in a nitride atmosphere under heated conditions for forming a hard nitride layer in the surface of the ball bearings.

## Patentansprüche

1. Verfahren zur Herstellung einer Kurbelwelle, umfassend Halten eines Kurbelzapfenabschnittes in einer fluor- oder fluoridhaltigen Gasatmosphäre unter erhitzter Bedingung, um eine Fluorid-Schicht an der Oberfläche des Kurbelzapfenabschnittes zu bilden und danach weiteres Halten in einer Nitrid-Atmosphäre unter erhitzter Bedingung, um eine harte Nitrid-Schicht in der Oberfläche des Kurbelzapfenabschnittes zu bilden.

2. Verfahren nach Anspruch 1, bei dem der Kurbelzapfenabschnitt der Kurbelwelle in einer fluor- oder fluoridhaltigen Gasatmosphäre gehalten wird, die 20.000 bis 70.000 ppm fluor- oder fluoridhaltiges Gas enthält.

3. Verfahren nach Anspruch 1 oder 2, bei dem der Kurbelzapfenabschnitt der Kurbelwelle in einer fluor- oder fluoridhaltigen Gasatmosphäre während einiger Minuten bis zu einer großen Anzahl von Minuten gehalten wird.

4. Verfahren nach Anspruch 1, bei dem der Kurbelzapfenabschnitt der Kurbelwelle in einer fluor- oder fluoridhaltigen Gasatmosphäre unter erhitzten Bedingungen während etwa 15 Minuten gehalten wird.

5. Verfahren zur Herstellung eines Lagers für eine Kurbelwelle, umfassend Halten von Kugellagern in einer fluor- oder fluoridhaltigen Gasatmosphäre unter erhitzten Bedingungen, um eine Fluorid-Schicht an der Oberfläche der Kugellager zu bilden und danach weiteres Halten in einer Nitrid-Atmosphäre unter erhitzten Bedingungen um eine harte Nitrid-Schicht in der Oberfläche der Kugellager zu bilden.

## Revendications

1. Procédé de fabrication d'un vilebrequin, comprenant le maintien d'une portion de tourillon de ce vilebrequin dans une atmosphère gazeuse contenant du fluor ou du fluorure à l'état chauffé, pour former une couche de fluorure sur la surface de la portion de tourillon et ensuite le maintien ultérieur dans une atmosphère de nitrure à l'état chauffé, pour former une couche de nitrure dure à la surface de cette portion de tourillon.

2. Procédé suivant la revendication 1, dans lequel la portion de tourillon du vilebrequin est maintenue dans une atmosphère gazeuse contenant du fluor ou du fluorure, comprenant de 20000 à 70000 ppm de fluor ou de fluorure.

3. Procédé suivant la revendication 1 ou 2, dans lequel la portion de tourillon du vilebrequin est maintenue dans une atmosphère gazeuse contenant du fluor ou du fluorure pendant quelques minutes, jusqu'à une vingtaine de minutes.

4. Procédé suivant la revendication 1, dans lequel la portion de tourillon du vilebrequin est maintenue dans une atmosphère gazeuse contenant du fluor ou du fluorure, à l'état chauffé pendant environ quinze minutes.

5. Procédé de fabrication d'un palier pour un vilebrequin, comprenant le maintien de roulements à billes dans une atmosphère gazeuse contenant du fluor ou du fluorure, à l'état chauffé, pour former une couche de fluorure sur la surface des roulements à billes et ensuite le maintien ultérieur dans une atmosphère de nitrure, à l'état chauffé, pour former une couche de nitrure dure à la surface de ces roulements à billes.

FIG. 1

22

A

22a

F I G. 2

20

21

22

31

31

22a

23

23

22a

F I G. 3

FIG. 4